Europäisches Patentamt

European Patent Office

Office européen des brevets

(19)

(11) Veröffentlichungsnummer: **0 108 418**
**B1**

(12) **EUROPÄISCHE PATENTSCHRIFT**

(45) Veröffentlichungstag der Patentschrift: 02.05.90

(51) Int. Cl.⁵: **G 06 F 13/00**

(21) Anmeldenummer: 83111106.7

(22) Anmeldetag: 07.11.83

(54) **Vorrichtung zur Mikroprogramm-Steuerung eines Informationstransfers und Verfahren zu ihrem Betrieb.**

(30) Priorität: 09.11.82 DE 3241356

(43) Veröffentlichungstag der Anmeldung:
16.05.84 Patentblatt 84/20

(45) Bekanntmachung des Hinweises auf die Patenterteilung:
02.05.90 Patentblatt 90/18

(84) Benannte Vertragsstaaten:
AT DE FR GB IT

(56) Entgegenhaltungen:
EP-A-0 026 083
GB-A-2 021 823
GB-A-2 061 577

IBM TECHNICAL DISCLOSURE BULLETIN, Band 25, Nr. 3B, August 1982, Seiten 1601-1603, IBM Corp., New York, US; C.E. CRAMER et al.: "Hardware augmentation for improved performance of communications protocol control"

(73) Patentinhaber: Siemens Aktiengesellschaft
Wittelsbacherplatz 2
D-8000 München 2 (DE)

(72) Erfinder: Stadlmeier, Hans, Dipl.-Ing.
Aichacher Strasse 2
D-8000 München 70 (DE)
Erfinder: Schönberger, Franz, Dipl.-Ing.
Grasmückenweg 23
D-8000 München 45 (DE)

(56) Entgegenhaltungen:

ELECTRONIC DESIGN, Band 27, Nr. 7, 29. März 1979, Seiten 102-106, Rochelle, US; D. STAMM et al.: "Free the uC's CPU from I/O hassles with a special I/O processor"

PROCEEDINGS OF THE IEEE 1982 NATIONAL AEROSPACE AND ELECTRONICS CONFERENCE NAECON 1982, Band 2, 18.-20. Mai 1982, New York, US; S. SCHAIRE et al.: "Single chip bus interface unit eases MIL-STD-1553B remote terminal/bus controller designs"

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Vorrichtung zur Mikroprogramm-Steuerung des Informationstransfers nach dem Oberbegriff des Anspruchs 1 und ein Verfahren zu ihrem Betrieb.

Beispielsweise besitzt der integrierte Hochleistungs-DMA-Controller ADMA (*advanced direct memory access*) vier voneinander unabhängige Kanäle, welche den Datentransfer zwischen Medien (Speicher, Peripherie-Geräte) oder allgemeiner gesprochen zwischen Datenquellen und Datensenken bewerkstelligen. Die Hauptsteuerung der Kanäle übernehmen Mikroprogramme, die innerhalb des elektronischen Bausteines in einem Mikrobefehlsspeicher ROM gespeichert sind.

Die Mikroprogramme zerfallen in zwei Hauptgruppen: Organisationsprogramme, welche beim Starten des Kanals oder bei Kettung von Befehlen oder von Daten die benötigte Steuerinformation aus den im Organisationsspeicher abgelegten Kommandoblöcken auslesen und nach einem Datentransfer im Organisationsspeicher wieder Steuerinformationen, z.B. Status-Informationen, ablegen, sowie interne Verwaltung vornehmen. Die Organisationsprogramme (ORG-Programme) steuern also den Control-Transfer.

DMA-Programme, welche den eigentlichen Datentransfer durchführen.

Die Organisationsprogramme bestehen aus ORG-Mikrobefehlen. Der von ORG-Mikrobefehlen gesteuerte Control-Transfer ist vergleichsweise einfach und wird ausschließlich von ORG-Mikrobefehlen selbst gesteuert. Dafür werden etwa 80 Mikrobefehle benötigt.

Im Unterschied zum Control-Transfer durch ORG-Programme ist der DMA-Transfer wesentlich komplexer, bedingt durch eine Vielzahl von zu berücksichtigenden Parametern wie physikalische und logische Bus-Breiten von Datenquelle und Datensenke, Zählrichtung und Zählart der Pointeradressen, gerade oder ungerade Pointeradressen, durchzuführende Adreßbegradigung (ALIGN) zur Reduzierung der Bus-Übertragungen und so weiter. Würde man alle diese DMA-Fälle ebenso rein mikroprogrammiert wie den Control-Transfer steuern, so wären für alle diese DMA-Fälle einige hundert Mikrobefehle vonnöten. Dies kostet Platz im Mikrobefehlsspeicher ROM und damit auch Lesezeit.

Aus IBM Technical Disclosure Bulletin, Band 25, Nr. 3B, August 1982, Seiten 1601 bis 1603 ist eine Schaltungsanordnung in einem DMA-Controller, speziell zur seriellen Datenübertragung unter Einsatz eines Protocoll-Controllers mit mehreren Datenübertragungskanälen bekannt, wobei jeder dieser Datenübertragungskanäle zur Übertragung jeweils spezieller Informationen wie Daten oder Statusinformationen vorgesehen ist.

Aus der GB—A—2 061 577 ist eine Schaltungsanordnung mit einem Controller, mit einem Mikroprogramm-Adreßregister und einem Mikroprogramm-Instruktionsregister speziell zum seriellen Übertragen von Daten auf einem asynchronen Bus bekannt.

Solche bekannten Schaltungen ermöglichen nur die Datenübertragung auf einer autonomen Schnittstelle.

Aus der GB—A—2 021 823 ist prinzipiell bekannt, wie bei einem Datentransfercontroller in Abhängigkeit von dem Signal "BUSHIGHE-NABLE" und dem Signalzustand des niederwertigsten Adreßbit die beiden Hälften eines Datenbusses mit Daten beschaltet werden um gegebenenfalls den Datentransfer zwischen einem 16-Bit-Bus und einem 8-Bit-Bus zu steuern.

Der vorliegenden Erfindung liegt die Aufgabe zugrunde, eine Vorrichtung der eingangs genannten Art zur Datenübertragung auf mehreren unabhängigen Datenübertragungskanälen anzugeben, bei der wenig Platz im Mikrobefehlsspeicher ROM und kurze Lesezeiten benötigt werden und die eine hohe Transferrate und eine kurze Reaktionszeit auf Transfer-Anforderungen ermöglicht sowie ein Verfahren zum Betrieb einer solchen Vorrichtung.

Diese Aufgabe wird erfindungsgemäß durch eine Vorrichtung nach dem Anspruch 1 bzw. ein Verfahren nach dem Anspruch 5 gelöst.

Ausgestaltungen und Vorteile der Erfindung sind in den Unteransprüchen, der Beschreibung und der Zeichnung dargestellt.

Ein Ausführungsbeispiel der Erfindung wird im folgenden anhand der Zeichnung näher erläutert.

Fig. 1 zeigt ein Blockschaltbild eines erfindungsgemäßen Ausführungsbeispiels.

Fig. 2 erläutert die Hauptsteuerung durch Mikrobefehle und die Mittel zur hardwaremäßigen Teilsteuerung.

Fig. 3 und 4 zeigen das Schaltbild einer erfindungsgemäßen Datenhandhabungseinheit.

Fig. 5 und 6 zeigen zu der Datenhandhabungseinheit nach Fig. 3 und 4 gehörige Wahrheitstabellen.

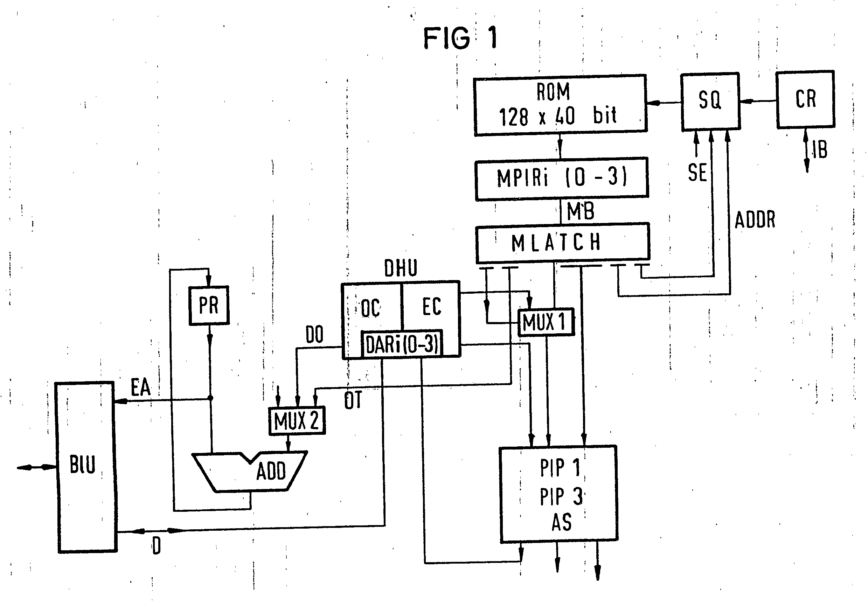

Fig. 1 zeigt ein Blockschaltbild für ein Ausführungsbeispiel nach der Erfindung. Beispielsweise besitzt der integrierte, mikroprogrammierte Hochleistungs-DMA-Controller ADMA vier voneinander unabhängige Kanäle, die den Datentransfer zwischen Quellen (SRC) und Senken (DST) autonom ermöglichen. Als SRC und DST können Speicher und Peripherie-Geräte in jeder Konfiguration, mit Bus-Breiten von 8 bzw. 16 Bit in jeder Kombination bearbeitet werden. Die Instruktionen an den Baustein ADMA, wie Adresse von Datenquelle (SRC-Adresse), Adresse von Datensenke (DST-Adresse), Anzahl der zu transferierenden Bytes (Bytecount) und DMA-Transfermodus, werden von einem Kommunikationsspeicherbereich (Organisationsspeicher) in einem 'memory control'-Block (Kommandoblock) nach einem Kanal-Start vom ADMA selbständig über einen internen Bus IB in Seine internen Adreßregister, Zählerregister und Kommandoregister PR, CR, transferiert.

Nach diesem sogenannten 'SETUP' eines selektierten Kanals beginnt der eigentliche DMA-Transfer.

Da im ADMA vier gleichwertige DMA-Kanäle realisiert sind und da diese vier Kanäle im Pipeline-Verfahren praktisch gleichzeitig arbeiten können, ist es möglich, über die im Transfermodus vorgegebenen Prioritätsvorgaben die Abarbeitung des DMA-Transfer-Blocks eines niederprioren Kanals durch eine Anforderung eines höherprioren Kanals ohne Zeitverlust zu unterbrechen. Da der ADMA nur eine Befehlsabarbeitungseinheit besitzt, werden die internen Zustände bezüglich Mikroprogramm-Fortschritt und Datentransfer-Fortschritt im ADMA für jeden Kanal selektiv gespeichert und verwaltet.

Zur Optimierung der DMA-Transfergeschwindigkeit und zur Minimierung der Bus-Belastung im DMA-Transferfall dient ein Align-Detektor ALIGN, welcher bei seiner Aktivierung dafür sorgt, daß anstelle einer Worttransferquantität zunächst nur ein einziger Byte-Transfer durchgeführt wird, damit die weiteren Transfers innerhalb des somit begonnenen DMA-Transfer-Blocks wieder wortweise weitergeführt werden können. Der Align-Detektor ALIGN entdeckt also einen möglichen Begradigungsfall des DMA-Transfers und leitet in einem solchen Fall einen solchen Begradigungsfall des DMA-Transfers ein. Der Begradigungsfall tritt ein bei bestimmten Konstellationen von SRC- und DST-Bus-Typen, niederwertigsten SRC- und DST-Pointeradreß-Bits und bei positiven Datenabarbeitungsrichtungen.

Gleichfalls zur Optimierung der DMA-Transfergeschwindigkeit und zur Minimierung der Bus-Belastung ist eine sogenannte 'assembly/disassembly'-Funktion realisiert, welche es ermöglicht, unterschiedliche SRC- und DST-Bus-Breiten übertragungstechnisch auszugleichen. So können beispielsweise bei einem 8 Bit SRC-Bus zwei Bytes hintereinander gelesen werden, damit dann auf einmal ein ganzes Wort (=2 Bytes) auf einem 16 Bit DST-Bus abgearbeitet werden können ('assembly'). Umgekehrt kann bei einem Wort-Lesezugriff auf einem 16 Bit SRC-Bus dieses von der Datenquelle gelesene ganze Wort in 2 Bytes aufgespalten und sodann in 2 Byte-Schreibzugriffen auf einen 8 Bit DST-Bus ausgegeben werden ('disassembly').

SRC- und DST-Daten-Blöcke können im ADMA in beliebigen String-Richtungen (vorwärts und rückwärts) abgearbeitet werden. Dies ist wichtig beim Rückwärts-Lesen von Bandgeräten. Die SRC- und DST-String-Richtungen können beim ADMA auch unterschiedlich sein.

Der ADMA unterstützt bei physikalischen Bus-Breiten von 16 Bit neben dem logischen Datentyp 'Wort' auch den logischen Datentyp 'Byte', was eine Beschleunigung des Datentransfers ermöglicht.

Weitere ADMA-Features sind 'verify', 'mismatch' und 'byte compare' und 'word compare' Optionen unabhängig von SRC- und DST-Bus-Konstellationen, unabhängig von Begradigungsfällen, unabhängig von logischen Datentypen Byte/Wort, unabhängig von Daten-String-Abarbeitungsrichtungen von SRC- und DST-Blöcken und unabhängig von einer 'translate'-Option.

Der integrierte Hochleistungs-DMA-Controller ADMA besitzt vier voneinander unabhängige Kanäle. Die Hauptsteuerung der Kanäle übernehmen dabei Mikroprogramme. Die Folge der Mikrobefehle wird von einem Sequenzer SQ gesteuert. Aufgabe eines bestimmten Zeitzustands-Parameters (T-State) ist es, mit der Phase PHI1 das Mikroprogramm-Instruktionsregister MPIRi des priorisierten Kanales i, i=0, 1, 2, 3 im ADMA zu selektieren und den dort enthaltenen Mikrobefehl MB in einen Mikrobefehls-Zwischenspeicher MLATCH zu transferieren. Der Mikrobefehls-Zwischenspeicher MLATCH enthält auf Dauer eines Mikrobefehls das zur Abarbeitung eines Bus-Zyklus oder zur Abarbeitung einer internen organisatorischen Adreßrechnung notwendige aktuelle Mikrowort. Eine Vielzahl der Hardware-Einheiten des ADMA erhält seine Instruktionen direkt vom Mikrobefehls-Zwischenspeicher MLATCH. Der Sequenzer SQ wird über Steuer- und Testeingänge SE, über Adreßeingänge ADDR und über Signale aus dem internen Register CR gesteuert. Der Sequenzer SQ stellt eine Mikrobefehls-Folgeadresse bereit, die aus dem Mikrobefehlsspeicher ROM den jeweils folgenden Mikrobefehl MB kanalspezifisch für einen selektierten Kanal ausliest.

Aus dem internen ADMA-Pointerregister-Satz PR wird eine 24 Bit Pointer-Adresse ausgelesen, und sowohl als ein Operand zu einem Addierer ADD als auch als eine externe Adresse EA zu einem Adreß-Puffer bei einer Bus-Schnittstelleneinheit BIU transferiert. Diese 24 Bit Pointer-Adresse EA dient u.a. als externe Adresse EA für eine externe Lese- bzw. Schreiboperation. Der zweite Operand für eine Adreß-Pointer-Addition im Addierer ADD wird in Abhängigkeit des Mikrobefehltyps aus dem Mikrowort im Zwischenspeicher MLATCH über die Leitung OT bei einem ORG-'OFFSET' oder mittels einer autonomen 'OFFSET'-Logik OC innerhalb einer Datenhandhabungseinheit DHU über die Leitung DO an Eingänge des Multiplexers MUX2 abgegeben. Welcher Eingang am Multiplexer MUX2 zur Einschleusung des zweiten Operanden in den Addierer ADD nun zum Zuge kommt, wird über diesen Multiplexer MUX2 festgelegt.

Das Ergebnis der im Addierer ADD durchgeführten Addition wird bei Gültigkeit des momentan bearbeiteten Mikrobefehls MB in den 24 Bit Pointerregister-Satz PR unter einer im Mikrowort vorgegebenen Adresse zurückgeschrieben.

Bei Mikrobefehlen MB, die den externen Datentransfer betreffen, wird im Gegensatz zu internen Organisations-Mikrobefehlen zusätzlich für den Fall, daß der Status für den Beginn einer externen Lese- bzw. Schreiboperation auf den externen Bus ausgegeben werden kann, ein kanalspezifischer Bytecounter dekrementiert, sowie das kanalspezifische Datenassemblyregister DARi, i=0, 1, 2, 3, der autonomen Datenhandhabungseinheit DHU mit einem Clock-Puls bzw. Lese-Signal beaufschlagt.

Aus Gründen der optimalen Ausnutzung des im internen Mikrobefehlsspeichers ROM gespeicherten Mikrobefehls wurde die Datenhandhabungseinheit DHU definiert, die es ermöglicht, unabhängig von der Bus-Breite, beispielsweise 8 Bit oder 16 Bit, des an den ADMA angeschlossenen Organisationsspeichers, in dem das Kanalprogramm des ADMA gespeichert ist, und unabhängig davon, ob die 'command pointer'-Adresse gerade oder ungerade ist, mit nur einem einzigen Satz sogenannter 'SETUP-Mikrobefehle die gesamten organisatorischen Transfers zum Laden der ADMA-Register CR, PR vom Speicher, der günstigerweise einen Kommando-Block aufweist, zu erreichen.

Die Datenhandhabungseinheit DHU weist eine 'OFFSET'-Steuerung OC und eine Ausführungs-Steuerung EC neben den Data-assembly-Registern DARi auf. Diese Steuerungen OC, EC betreffen sowohl Informationsaustausch mit externen Informationsquellen als auch mit externen Informationssenken. Das im Zwischenspeicher MLATCH gespeicherte Mikrowort liefert Steuersignale SE zur Steuerung des Sequenzers SQ und steuert Mittel PIP zum Pipelining von Daten, steuert den Bytecounter und liefert Informationen für die Adreßpointer-Steuerung und für die Sequenzer-Steuerung und liefert Informationen für die Steuerung des externen Schreibzugriffes.

Mit einer Anordnung nach Fig. 1 kann jede Pointeradresse inkrementiert, dekrementiert oder auch konstantgehalten werden. Mit einer Anordnung nach Fig. 1 können beliebige physikalische Bus-Breiten und logische Bus-Breiten jeweils miteinander kombiniert werden.

Inwieweit die Ausführungs-Steuerung EC der Datenhandhabungseinheit DHU über einen Multiplexer MUX1 auf die Ausführungssteuerung AS des ADMA Einfluß nehmen darf, wird von dem im Zwischenspeicher MLATCH enthaltenen Mikrowort gesteuert.

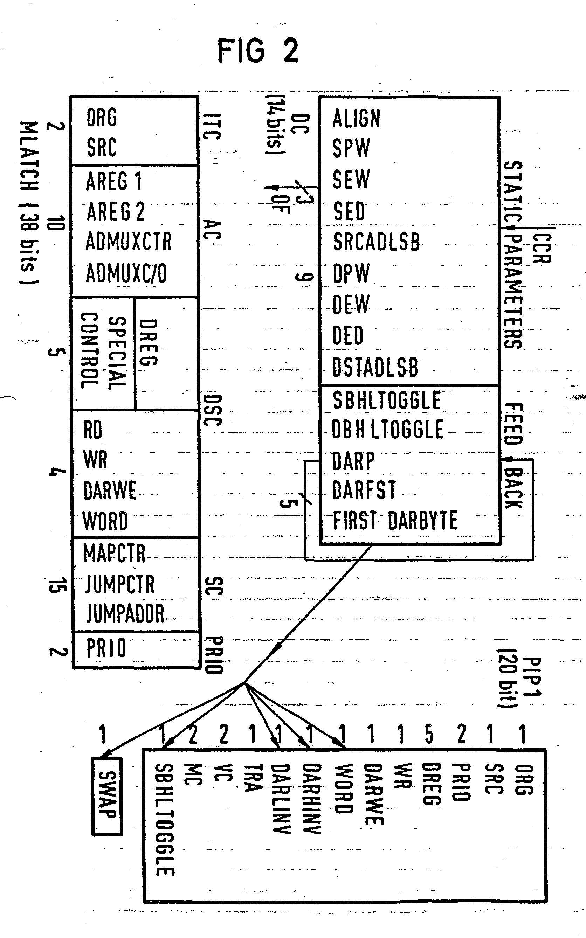

Fig. 2 erläutert die Hauptsteuerung durch Mikrobefehle MB und die hardwaremäßige Teilsteuerung durch die Datenhandhabungseinheit DHU. Die Mikrobefehle MB bestehen aus vier Hauptfeldern:

Sequenz-Steuerung SC, welche für die Folgeadreß-Bereitstellung sorgt.

Daten/Spezial-Steuerung DSC: Dieses Feld enthält u.a. die Adresse DREG des zu beschreibenden/lesenden ADMA-Registers PR, sowie Informationen über die durchzuführende Aktion (Lesen/RD, Schreiben/WR) und die zu transferiende Menge (Wort oder Byte/WORD). Bei sogenannten internen Befehlen (RD=0 und WR=0) führen diese Befehle keinen externen Bus-Zyklus durch, sondern nehmen interne Verwaltung vor. Bei solchen internen Befehlen enthält das DREG-Feld Steuerinformationen.

Adreß-Steuerung AC: Die Adreß-Steuerung AC enthält die Adresse AREG1 des Pointerregisters PR, welches die für den Informationstransfer benötigte externe Adresse EA enthält. Ferner enthält die Adreß-Steuerung AC die Adresse AREG2 des Pointerregisters PR, in das die modifizierte Pointer-Adresse zurückgeschrieben werden soll. Ferner enthält die Adreß-Steuerung AC die Steuerung der Adreß-Modifikation durch den Addierer ADD über die beiden Bits ADMUXCTRL und ADMUXC/0.

Befehlstyp-Steuerung ITC: Die Befehlstyp-Steuerung ITC enthält Angaben über den Befehlstyp. wie z.B. ORG/DMA oder SRC/DST.

Der Informationstransfer wird von einer gemischten Hardware-Firmware-Steuerung durchgeführt. Die Hauptsteuerung übernehmen dabei Mikrobefehle MB vom Typ DMA. Teile der Datensteuerung wie die Angabe über die zu transferierende Datenmenge (WORD) bzw. die Information über die involvierten Bytes (DARHINV, DARLINV) eines Satzes von Data-Assembly-(Stütz)-Registern DARi sowie die 'OFFSET'-Bildung für die Pointeradreß-Modifikation ($\pm$ 0, 1, 2) und die Steuerung eines 'swappers' in der Bus-Schnittstelleneinheit BIU werden von einer speziellen Hardware-Einrichtung, nämlich der Datenhandhabungseinheit DHU, durchgeführt. Die Datenhandhabungseinheit DHU verwendet spezielle Datenregister, nämlich die vorgenannten Data-Assembly-Register DARi, für die Zwischenspeicherung von Datenbytes. Zusätzlich verwaltet die Datenhandhabungseinheit DHU noch einige Steuer-Flip-Flops, wie z.B. den Data-Assembly-Register-Füllstand oder den Data-Assembly-Register-Pointer, die für die Eintrags-/Austrags-Folge der Daten in bezug auf die Datenhandhabungseinheit DHU von Bedeutung sind. Schließlich stellt die Datenhandhabungseinheit DHU Informationen für eine 'match'- und 'verify'-Einheit bereit, welche Datenvergleiche vornimmt.

Durch diese gemischte Steuerung des Informationstransfers ist es möglich, die gesamten Anforderungen des Informationstransfers mit nur fünf Mikroprogrammen mit insgesamt etwa 15 Mikrobefehlen MB zu erfüllen.

Die gesamten Probleme beim Informationstransfer könnten im Prinzip mit einer rein mikroprogrammierten Steuerung gelöst werden, was jedoch in Anbetracht der Vielzahl von Kombinationen der Einfluß-Parameter (über 350 Kombinationen sind möglich) mit großem Aufwand verbunden wäre. Die Erfüllung dieser vielfältig verschiedenen Informationstransfer-Aufgaben ist daher einer speziellen autonomen Hardware-Einrichtung, eben der Datenhandhabungseinheit DHU, übertragen, welche mit der Mikroprogramm-Steuerung beim Informationstransfer zusammenarbeitet. Nur so ist es möglich, mit ca. 15 Mikrobefehlen MB den gesamten Anforderungen des Datentransfers zu genügen, bei voller Unterbrechbarkeit der DMA-Kanäle untereinander, ohne Zeitverlust bei Unterbrechung eines Kanals durch einen anderen.

Die Datenhandhabungseinheit DHU steuert nach mikroprogrammierter Initialisierung selbständig die kanalspezifische, optimale Abarbeitung der gesamten DMA-Transfer-Blöcke aller vier Kanäle. Der Modus dieser Abarbeitung wird durch die im 'SETUP' in den Kommando-Registern CR abgelegten, kanalspezifischen vier Steuerparameter-Sätzen bestimmt. Die Datenhandhabungseinheit DHU besteht aus einer Hardware-Steuerung EC, OC, welche von kanalspezifischen Registern zur Zwischenspeicherung der Informationen, den vier Data-Assembly-Registern DARi, unterstützt wird. Die Data-Assembly-Register DARi werden speziell für Assembly/Disassembly-Fälle benötigt, aber auch für eine Zwischenspeicherung von Steuerinformationen, wie der Information über einen Byte-'OFFSET' beim 'translate'-Fall oder über einen Wort-'OFFSET' für die Ausführung eines relativen Sprunges bei Befehlskettung. Schließlich stellen die Data-Assembly-Register DARi die Basis für die 'match'- und 'verify'-Steuerung dar.

Die Datenhandhabungseinheit DHU führt für einen gerade selektierten Kanal folgende Aktivitäten durch:

Ermittlung der Zugriffsquantität Byte oder Wort bei Schreiben bzw. Lesen auf dem externen Bus,

Aktivierung der kanalspezifischen Data-Assembly-Register DARi-Hälften in bezug auf Schreib- bzw. Lese-Operationen,

Steuerung der internen Daten-Busse D inklusive eines Eingangs- bzw. Ausgangs-'swappers', der in der Bus-Schnittstelleneinheit BIU enthalten ist,

Steuerung der notwendigen Aktionen für 'compare'-, 'mismatch'- und 'verify'-Operationen,

Verwaltung der vier Data-Assembly-Register DARi bezüglich DARi-Füllstand (DARFST), Lage des ersten transferierten Bytes in einer Wortquantität (FIRSTDARBYTE), Auftreten eines Begradigungsfalles (DARP),

Verwaltung von kanalspezifischen Signalen SBHLTOGGLE und DBHLTOGGLE zur DARi-Eintrags- und DARi-Austrags-Steuerung,

Lieferung eines 'OFFSET'-Wertes D0 im Zweierkomplement, der zum SRC- bzw. DST-Adreßpointer nach jedem SRC- bzw. DST-DMA-Zugriff addiert wird, um eine blockweise Abarbeitung der Informationsstrings zu gewährleisten.

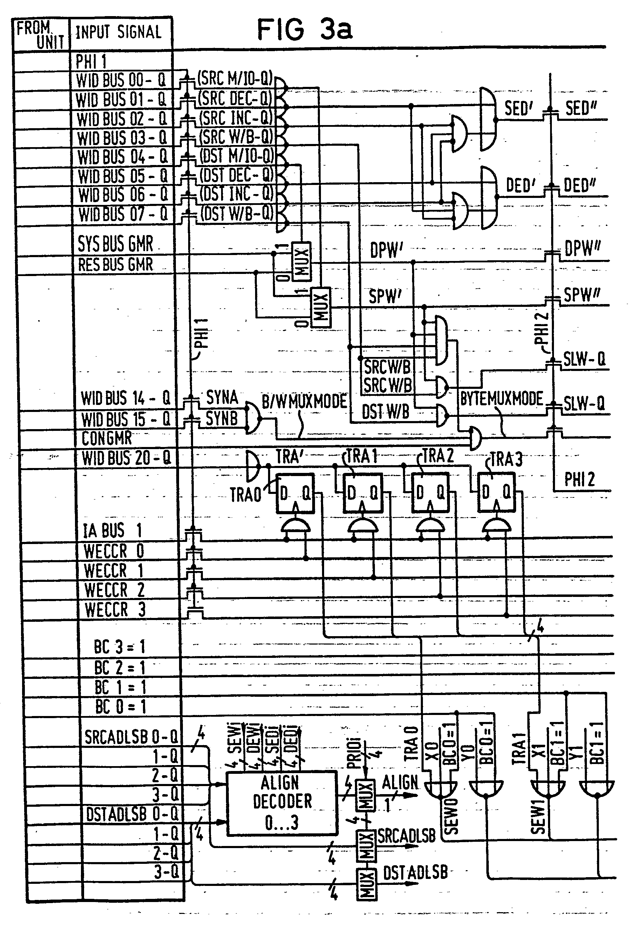

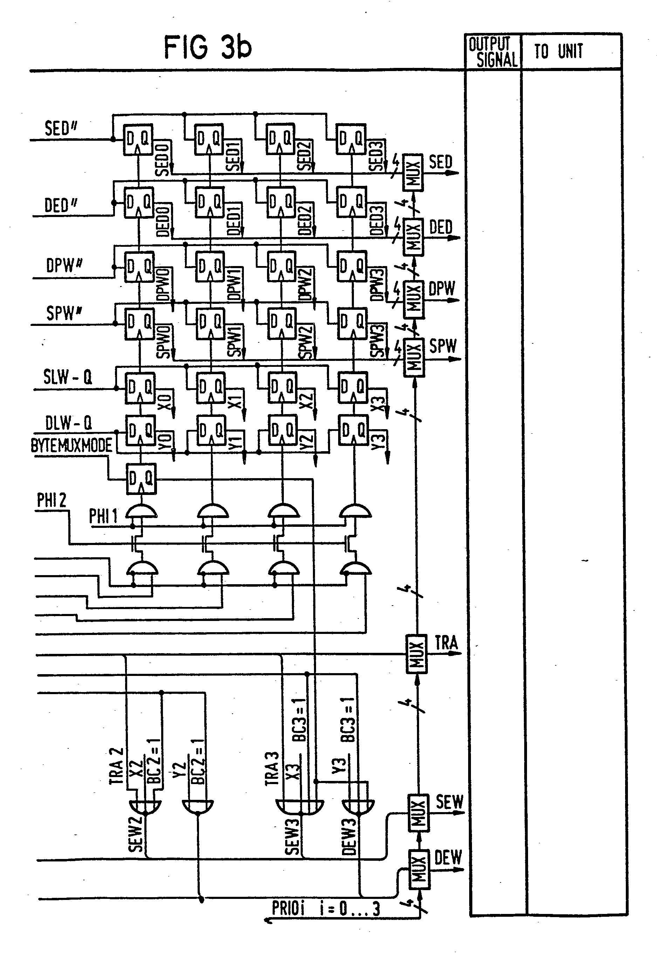

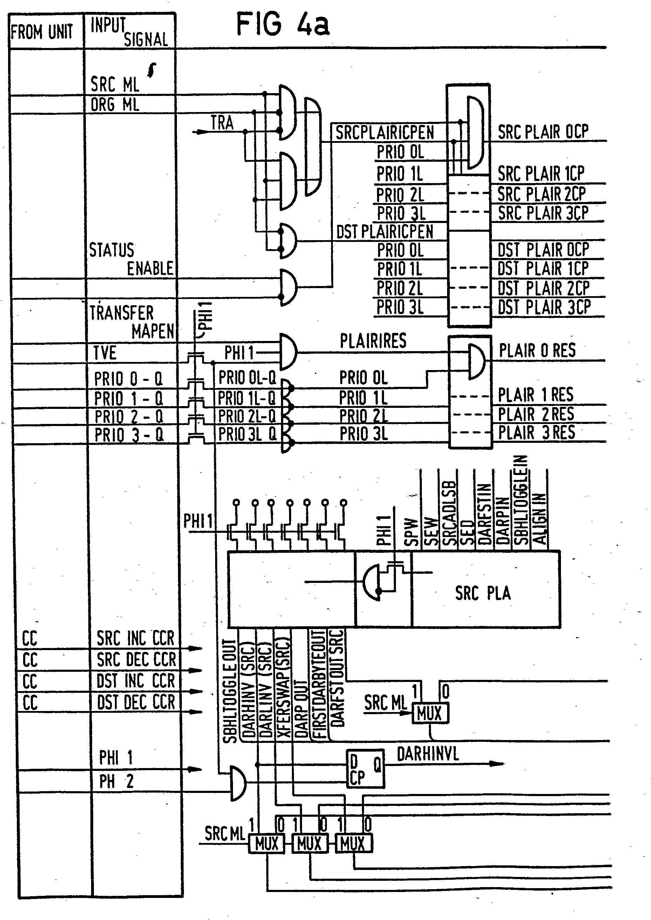

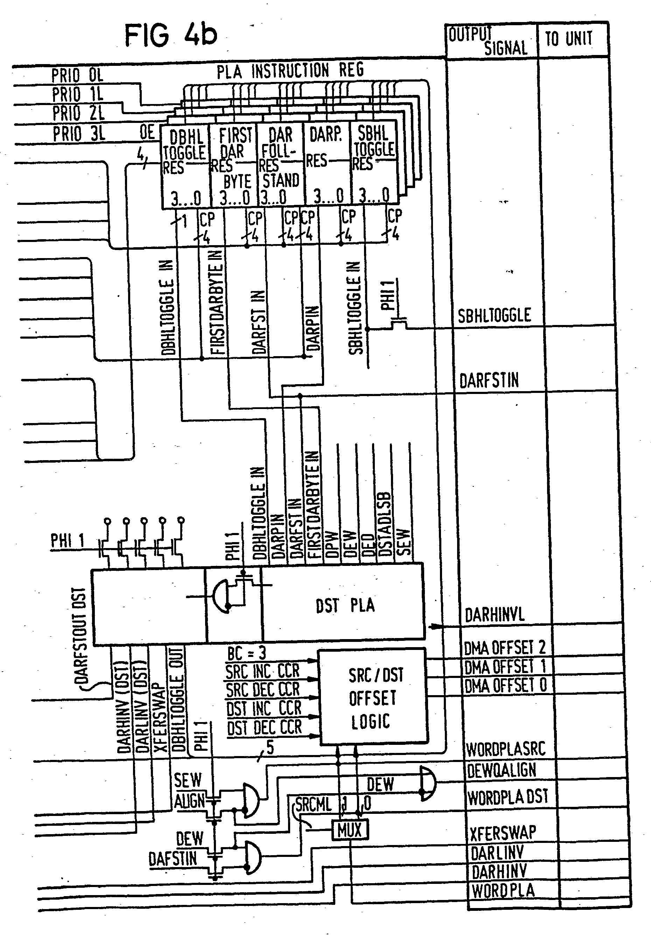

Die Fig. 3 und 4 zeigen das Schaltbild einer erfindungsgemäßen Datenhandhabungseinheit DHU. Im folgenden werden zunächst die verwendeten Steuersignale erklärt:

SPW (source physical bus width) gibt die physikalische Bus-Breite an, mit der bei Source-Fetches gearbeitet werden muß. SPW=SYSBUS (CCR) bei Systemspace-Zugriffen (SRCM/I0=1). SPW=RESBUS (CCR) bei Residentspace-Zugriffen (SRCM/I0=0). Die Polarität von SPW ist 0 bei einem 8 Bit-Bus und ist 1 bei einem 16 Bit-Bus.

DPW (destination physical bus width) gibt die physikalische Bus-Breite an, mit der bei Destination-Operationen gearbeitet werden muß. DPW=SYSBUS (CCR) bei Systemspace-Zugriffen (DSTM/I0=1). DPW=RESBUS (CCR) bei Residentspace-Zugriffen (DSTM/I0=0). Die Polarität von DPW ist 0 bei einem 8 Bit-Bus und ist 1 bei einem 16 Bit-Bus.

SLW (source logical bus width) gibt die logische und maximale Zugriffsquantität auf dem Datenquellen-Bus. SLW ist bei Zugriffsquantität Byte=0 und bei Zugriffsquantität Wort=1. SLW wird gebildet aus dem SRCW/B-Bit des Kanal-Steuerregisters (CCR) innerhalb des internen Registers CR, wird jedoch gleich 0 gesetzt unabhängig von SRCW/B, wenn SPW nur 8 Bit ist. Die physikalische Bus-Breite SPW schränkt die logische Bus-Breite SLW ein. Durch die Angabe SRCW/B ist implizit auch ein Datentyp vorgegeben und damit eine breitenabhängige Interpretation der Adresse. SLW=0, wenn die Adresse eine Byteadresse ist. SLW=1, wenn die Adresse eine Wortadresse ist, wobei Adresse auf das niederwertige Byte des Wortes zeigt; das höherwertige Byte dieses Wortes wird immer durch die inkrementierte Adresse des niederwertigen Bytes angesprochen. Das gilt auch für die Abarbeitung von Strings in Rückwärtsrichtung (Autoddekrement).

DLW (destination logical bus width) gibt die logische und maximale Zugriffsquantität auf dem Datensenken-Bus an. DLW=0 bei einer maximalen Zugriffsquantität Byte und DLW=1 bei einer maximalen Zugriffsquantität Wort. DLW wird gebildet aus dem DSTW/B-Bit des Kanal-Steuerregisters CCR, wird jedoch 0 gesetzt unabhängig von DSTW/B, wenn die physikalische Bus-Breite zur Datensenke (DPW) nur 8 Bit ist. Die physikalische Bus-Breite DPW schränkt die logische Bus-Breite DLW ein.

SEW (source effective bus width) bzw. DEW (destination effective bus width) geben die effektive Zugriffsquantität auf dem zugehörigen Inforamtions-Bus an. SEW bzw. DEW=0 bedeuten Zugriffsquantität Byte und SEW bzw. DEW=1 bedeuten Zugriffsquantität Wort. SEW wird im Normalfall bestimmt aus dem Minimum von SPW und SLW. In drei Sonderfällen wird SEW fest auf 0 gelegt, z.B. im TRANSLATE-Fall (TRA=1), im BYTE MUX MODE-Fall (BMM=1) und im Falle der Abarbeitung des letzten Bytes eines Strings, also wenn BYTECOUNT=1 (BC=1) ist.

DEW wird im Normalfall bestimmt aus dem Minimum von DPW und DLW. In zwei Sonderfällen wird DEW fest auf 0 gelegt: Im Byte MUX MODE-Fall (BMM=1) und im Falle der Abarbeitung des letzten Bytes eines Strings, also wenn BYTECOUNT=1 (BC=1) ist.

SED (source effective direction) bzw. DED (destination effective direction) geben die effektive Source-bzw. Destination-String-Abarbeitungsrichtung des DMA-Blocks an. Die SED bzw. DED hängen ab von den Kommando-Bits SRCINC, SRCDEC, DSTINC, DSTDEC des Kanal-Steuerregisters (CCR), wobei folgender Zusammenhang zwischen den Source- bzw. Destination-Pointermodifikationen und SED bzw. DED besteht:

Solange die Source-Pointermodifikation, die durch SRCINC und SRCDEC repräsentiert wird, ein Inkrementieren oder ein Dekrementieren angibt, gibt auch SED unabhängig von der Destination-Pointermodifikation, die durch DSTINC und DSTDEC repräsentiert wird, ein Inkrementieren (SED=1) bzw. ein Dekrementieren (SED=0) an. Nur wenn die Source-Pointermodifikation keine Änderung angibt, gibt SED ein Inkrementieren bzw. ein Dekrementieren an, sobald die Destination-Pointermodifikation ein Inkrementieren bzw. ein Dekrementieren angibt. Geben sowohl die Source. Pointermodifikation als auch die Destination-Pointermodifikation keine Änderung an, so gibt SED ein Inkrementieren an.

DED gibt unabhängig von der Source-Pointermodifikation ein Inkrementieren (DED=1) bzw. ein Dekrementieren (DED=0) an, sobald die Destination-Pointermodifikation ein Inkrementieren bzw. Dekrementieren angibt. Gibt die Destination-Pointermodifikation keine Änderung an so gibt DED ein Inkrementieren bzw. ein Dekrementieren, an, sobald die Source-Pointermodifikation ein Inkrementieren bzw. Dekrementieren angibt. Geben sowohl die Destination-Pointermodifikation als auch die Source-Pointermodifikation keine Änderung an, so gibt DED ein Inkrementieren an.

Die Signale SRCADLSB bzw. DSTADLSB entsprechen dem niederwertigsten Bit des Source-Datenpointerregisters (SPR) bzw. des Destination-Datenpointerregisters (DPR). Durch die beiden gerade genannten Signale wird bei Byte-Transfers mit Bus-Konfigurationen von 16 Bit die Auswahl der relevanten Bus-Hälfte gesteuert, da in diesem Falle der Bus-Transfer alternativ auf beiden Bus-Hälften abgewickelt werden kann. Bei 8 Bit Bus-Konfigurationen findet der Transfer stets auf der niederwertigen Bus-Hälfte statt, unabhängig von den beiden gerade genannten Signalen SRCADLSB und DSTADLSB. Ist eines dieser beiden gerade genannten Signale gesetzt, so wird die höherwertige Bus-Hälfte des jeweils zugehörigen Busses ausgewählt bei einer logischen Bus-Breite von 8 Bit bzw. es wird in einem ersten Bus-Zyklus die höherwertige Bus-Hälfte und in einem zweiten Bus-Zyklus die niederwertige Bus-Hälfte bei einer logischen Bus-Breite von 16 Bit ausgewählt.

DARFST (Data Assembly Register Füllstand): Der DAR-Füllstand gibt die Anzahl der im Data-Assembly-Register DARi zwischengespeicherten (assemblierten) Bytes wieder. Der DAR-Füllstand wird sowohl vom Source- als auch vom Destination-PLA-Zyklus modifiziert und in den kanalspezifischen PLA INSTRUCTION REGISTER'n verwaltet. Der Source-Zyklus erhöht den Füllstand um 2 beim Auslesen eines Wortes und um 1 beim Auslesen eines Bytes, der Destination-Zyklus erniedrigt den Füllstand um 2 bie Wort-Operationen und um 1 bei Byte-Operationen. Aus Vereinfachungsgründen wurde der Füllstand mit Hilfe eines 1 Bit-TOGGLE's realisiert, der sowohl in Source- als auch in Destination-Zyklen bei Wortquantitäten un verändert bleibt, jedoch bei einer Bytequantität seinen Wert invertiert. Der DARFST wird rückgesetzt bei jedem Eintritt in den DATA TRANSFER BLOCK.

DARFSTIN: DARFST-Signal am Eingang eines Source- bzw. Destination-Zyklus.

DARFSTOUT: DARFST-Signal nach Ausführung eines Source- bzw. Destination-Zyklus.

FIRSTDARBYTE: Kennzeichnet die Lage des als ersten ins DATA ASSEMBLY REGISTER (DARi) eingetragenen Bytes bei "Aufsammeln" von 2 Bytes zur Bildung eines Wortes oder kennzeichnet die Lage des Bytes im Dari bei Eintragen von nur einem einzigen Byte bei byteweisen SRC/DST-Transfer-Fällen. Das gerade genannte Signal wird nur im Source-Zyklus verändert. Das gerade besprochene Byte deutet auf das niederwertige Byte, wenn entweder SEW=16 Bit oder SEW=8 Bit ist und zugleich SED ein Inkrementieren angibt. FIRSTDARBYTE deutet auf das höherwertige Byte, wenn SEW=8 Bit ist und SED ein Dekrementieren angibt. Die Polarität des FIRSTDARBYTE ist 0, wenn das niederwertige Byte gekennzeichnet werden soll. Wenn ein Wort im DARi durch Aufsammeln von zwei Bytes mit zwei Bus-Zyklen gebildet werden soll, so wird das Signal FIRSTDARBYTE mit dem Eintrag des ersten Bytes dieses Wortes ins DARi festgelegt und bleibt gespeichert bis zu einem erneuten Eintrag eines ersten Bytes eines weiteren Wortes ins DARi. Die Information FIRSTDARBYTE wird benötigt für die Austrags-Steuerung aus dem DARi in einem Destination-Zyklus. Nach jedem Eintritt in einen DATA TRANSFER BLOCK wird FIRST DAR BYTE rückgesetzt.

FIRST DAR BYTE IN ist das FIRST DAR BYTE-Signal vor Ausführung eines Source-Zyklus.

FIRST DAR BYTE OUT ist das FIRST DAR BYTE-Signal nach Ausführung eines Source-Zyklus.

ALIGN: Dieses Signal wird benötigt zur Signalisierung der Erkennung eines Begradigungsfalles. Ein Begradigungsfall liegt dann vor, wenn zur Optimierung der DMA-Transfergeschwindigkeit bei bestimmten Konstellationen von SRC/DST-Bus-Breiten, SRCADLSB, DSTADLSB, SRC- bzw. DST-Zählrichtungen ein Byte transferiert wird (von SRC nach DST), damit dann alle weiteren Transfers—zumindest auf einer Seite (SRC oder DST)—wortweise, und damit erheblich schneller, stattfinden können. Begradigt wird in folgenden Fällen:

SEW=16 Bit, SCRADLSB=1, SED=Inkrement, DEW=16 Bit, DSTADLSB=1, DED=Inkrement: SRC und DST sind begradigbar. Der Transfer findet nach Begradigung sowohl auf SRC- als auch auf DST-Seite wortweise statt.

SEW=16 Bit, SRCADLSB=1, SED=Inkrement, DEW=8 Bit, DSTADLSB ohne Einfluß, DED entweder gleich Inkrement oder gleich 'no modify': SRC ist begradigbar. Der Transfer findet nach Begradigung auf der SRC-Seite wortweise statt.

Auf der DST-Seite wird nach wie vor byteweise abgearbeitet.

SEW=8 Bit, SRCADLSB ohne Einfluß, SED entweder gleich Inkrement oder gleich 'no modify', DEW=16 Bit, DSTADLSB=1, DED=Inkrement: DST ist begradigbar. Der Transfer findet nach Begradigung auf der DST-Seite wortweise statt. Auf der SRC-Seite wird nach wie vor byteweise abgearbeitet.

Alle diese Fälle führen zur Aktivierung des Signals ALIGN, welches die Begradigung einleitet, in dem zunächst nur ein Byte von SRC nach DST transferiert wird.

DARP (DATA ASSEMLBLY REGISTER POINTER): Dieses Signal wird benötigt als Merker für den Begradigungsfall, da das Erkennungssignal für den Begradigungsfall (ALIGN) nach Übertra-

gung des ersten Bytes verschwindet. DARP wird gesetzt beim Holen des ersten SRC-Bytes für eine Begradigung und bleibt unverändert bei allen folgenden Byte/Wort-Transfervorgängen. Der DARP modifiziert, wenn er gesetzt ist, unter Berücksichtigung des DARFSTIN den Eintrag der Daten ins DATA ASSEMBLY REGISTER, signalisiert dem Destination-Zyklus die Art des Eintrags eines Wortes im DARi und übernimmt damit teilweise die Aufgabe des FIRST DAR BYTE. Der DARP wird rückgesetzt mit jedem Eintritt in einen neüen DATA TRANSFER BLOCK.

Folgende Gesetzmäßigkeit gilt bei der Eintrags-Steuerung ins DARi, wenn DARP=1 gesetzt ist:

Ist die Transferquantität (WORD PLA)=16 Bit und ist DARFSTIN=0, so wird das niederwertige Byte nach DARH und das höherwertige Byte nach DARL eingetragen. Ist die Transferquantität=8 Bit und DARFSTIN=0, so wird das Byte nach DARH eingetragen. Ist die Transferquantität=8 Bit und ist DARFSTIN=1, so wird das Byte nach DARL eingetragen.

DARPIN ist das Signal DARP am Eingang der SRC- bzw. PLA bzw. DST-PLA.

DARPOUT ist das Signal DARP am Ausgang der SCR-PLA.

SBHLTOGGLE (source byte high/low toggle) wird benötigt für DARi-Eintragssteuerung im SRC-Zyklus, sowie zur Freigabe des 'match'-Zustands bei Wortmatches. Dieses Signal wechselt bei jedem SRC—Zyklus, mit dem ein einziges Byte geholt wurde, seinen Zustand. Dieses Signal bleibt also unverändert bei wort weisen SRC-Zyklen und bei allen DST-Zyklen. Ist dieses Signal gesetzt, so modifiziert es unter Berücksichtigung weiterer Parameter, wie Eingangsfüllstand (DARFSTIN) und DARP den Eintrag eines zu holenden Bytes ins DARi. Ist dieses Signal zu Beginn eines SRC-Zyklus gesetzt, so wird nach dem Holen des zweiten Bytes zum normalen Bytematch der im vorherigen ersten Byte-Holzyklus gebildete Matchmerker zur Bildung eines Wortmatch (falls enabled) herangezogen. Dieses Signal wird rückgesetzt mit jedem Eintritt in einen neuen DATA TRANSFER BLOCK.

DBHLTOGGLE (destination byte high/low toggle): Dieses Signal wird benötigt für DARi-Austragssteuerung im DST-Zyklus und modifiziert hier unter Berücksichtigung weiterer Parameter wie Eingangsfüllstand (DARFSTIN) und DARP das Auslesen von Bytes aus dem DARi. Dieses Signal wechselt mit jedem byteweisen Schreiben in einem DST-Zyklus seinen Zustand. Dieses Signal bleibt also unverändert bei wortweisem Schreiben im DST-Zyklus und in allen SRC-Zyklen. Dieses Signal wird rückgesetzt mit jedem Eintritt in einen neuen DATA TRANSFER-BLOCK.

XFERSWAP (DMA TRANSFER SWAP): Dieses Signal dient dazu, die Kommunikation zwischen dem DARi (über den internen Bus D) und dem externen Bus im Falle von DMA-Transfer-Zyklen zu steuern. Im Falle eines gesetzten Signals DMAWRITE wird das Signal XFERSWAP direkt dazu verwendet, daß ein DATA OUTPUT SWAPPER an der externen Bus-Schnittstelleneinheit BIU gesteuert wird, der den internen Datenbus D byteweise gespiegelt auf den externen Datenbus schaltet. Im Falle eines Signals DMAREAD wird das Signal XFERSWAP in einer Pipeline-Kette (PIP1, PIP3) verzögert, um bei Ankommen des Lese-Datums über einen DATA INPUT SWAPPER in der Bus-Schnittstelleneinheit BIU die Möglichkeit des byteweise gespiegelten Einlesens des externen Datenbusses auf den internen Datenbus D gewährleisten zu können. Die Polarität von XFERSWAP ist 0, wenn die Bus-Hälften nicht gespiegelt werden sollen.

BYTEMUXMODE (8 Bit Multiplex Modus): Dieses Signal ist gesetzt, wenn Kanal 3 als Byte-Multiplex-Kanal konfiguriert ist, und wenn die effektive Bus-Breite (SEW oder DEW) 8 Bit beträgt.

DARHINV (DAR BYTE HIGH INVOLVED) und DARLINV (DAR BYTE LOW INVOLVED): Information über die in einem DMA-Source-bzw. DMA-Destination-Zyklus verwendeten DARi-Teile. Ob die DARi-Registerteile während DMA-Zyklen beschrieben oder gelesen werden, hängt ab vom zugehörigen Mikrobefehls-Bit (RD, WR, ORG, DARWE, SRC), sowie von maschineninternen Sperrsignalen wie SPLIT1, SPLIT2 und einer Zeitbedingung für Lesen bzw. Schreiber in bezug auf das DARi.

WORDPLASRC: Ausgangssignal aus der Datenhandhabungseinheiten DHU gibt die Zugriffsquantität (Wort oder Byte) auf den externen Bus im Falle eines SRC-Zyklus. Ein SRC-Wortzugriffswunsch liegt vor, wenn die effektive SRC-Bus-Breite 16 Bit ist und kein ALIGN-Fall erkannt wird.

WORDPLADST: Ausgangssignal aus der Datenhandhabungseinheit DHU gibt die Zugriffsquantität (Wort oder Byte) auf dem externen Bus am im Falle eines DST-Zyklus. Ein DST-Wortzugriffswunsch liegt vor, wenn die effektive Destination-Bus-Breite DEW=16 Bit ist und der DAR-Füllstand gleich 2 Bit ist (DARFSTIN=0).

WORDPLA: Dieses Ausgangssignal gibt die gewünschte Zugriffsquantität (Byte oder Wort) als Steuersignal an die Bus-Schnittstelleneinheit BIU an. Dieses Signal setzt sich zusammen aus WORDPLASRC im Falle eines Source-Zyklus (SCRML=1) bzw. aus WORDPLADST im Falle eines Destination-Zyklus.

DMA OFFSET 2 ... 0: Diese Ausgangssignale werden benötigt während DMA-SRC- und während DMA-DST-Zyklen zur Modifikation des gerade verwendeten SRC-Daten-Pointers bzw. DST-Daten-Pointers, da diese Pointer nach einem DMA-Zyklus automatisch um die Zugriffsquantität (Byte/Wort) inkrementiert bzw. dekrementiert werden können. Diese Signale werden im Zweierkomplement ermittelt und direkt zum Addierer ADD geleitet, wo eine 'SIGN EXTENSION' auf 24 Bit vorgenommen wird. Es sind dann folgende OFFSETs OF möglich:

+2: Inkrement für Wortquantität.

+1: Inkrement für Bytequantität bzw. für Wortquantität mit Endebehandlung.

0: keine Veränderung für Wort-/Bytequantität.

−1: Dekrement für Bytequantität.

−2: Dekrement für Wortquantität.

Die Generierung des DMA OFFSET's OF wird gesteuert durch die INC/DEC-Bits des Kanal-Steuerregisters CCR in Abhängigkeit der Zugriffsquantität (WORDPLA) und des Bytecounts (BC=3) für die Endebehandlung.

SRCPLAIR 3 ... 0 CP, DSTPLAIR 3 ... 0 CP (PLA INSTRUCTION REGISTER CLOCKS): Die vier Register PLAIR 3 ... 0 bilden den Status der vier DMA-Kanäle zu jedem Zeitpunkt ab. Diese Register sind sowohl Instruktionsregister für die PLA als auch Ergebnisregister nach dem Durchlauf der jeweiligen PLA. Da zu einem bestimmten Zeitpunkt nur ein durch die Prioritätslogik PRIOi freigegebener DMA-Kanal die Ablauf-Steuerung AS und die Abarbeitungseinheiten des ADMA für sich beanspruchen darf, wird auch in der Datenhandhabungseinheit DHU der kanalspezifische Parameter-Satz (gemultiplext von vier Kanälen) an die SRC- und DST-PLA geschaltet. Nach dem SRC- bzw. DST-PLA-Durchlauf werden abhängig vom Mikrowort (SRC-Bit, ORG-Bit) und abhängig vom Maschinenmodus TRANSLATE, sowie abhängig von internen Freigabesignalen wie STATUS ENABLE und BIUSPLIT-Q die Ausgänge der jeweiligen PLA in das kanalspezifische Register PLAIRi zurückgeschrieben. Da im SRC-PLA-Durchlauf der Parameter DBHLTOGGLE nicht verändert werden soll, übernimmt das Register PLAIRi bei Aktivierung des SRCPLAIRCP nur die Parameter FIRST DAR BYTE, DARFST, DARP und SBHLTOGGLE. Bei Aktivierung des DSTPLAIRCP werden nur die Paramenter DBHLTOGGLE und DARFST ins Register PLAIRi übernommen.

PLAIR 3 ... 0 RES (PLA INSTRUCTION REGISTER RESET): Diese vier Signale veranlassen bei Eintritt eines spezifischen DATA-Kanals in einen neuen DATA TRANSFER BLOCK das RESET für dessen PLA INSTRUCTION REGISTER PLAIRi. Dabei werden folgende Signale auf eine logische 0 gesetzt:

DBHLTOGGLE, FIRST DAR BYTE, DARFST, DARP,

SBHLTOGGLE.

Zurückgesetzt wird mikroprogramm-gesteuert mit einer bestimmten Codierung im MAPCTR-Feld des Mikrobefehls MB, nämlich der Bedingung TRANSFER MAPEN.

WECCR 3 ... 0: Diese Schreibclocks der Kanal-Steuerregister CCR werden aktiviert beim 'SETUP', wenn das Kanalkommando vom ADMA-Kommando-Block selbständig ins Kanal-Steuerregister CCR geschrieben worden ist.

WIDBUS 00-Q ... 07-Q: Diese Signale gehören zu einem lokalen Datenbus zum Beschreiben der statischen PLA-Parameter-Flip-Flops mit den im Kanal-Steuerregister CCR enthaltenen Parametern.

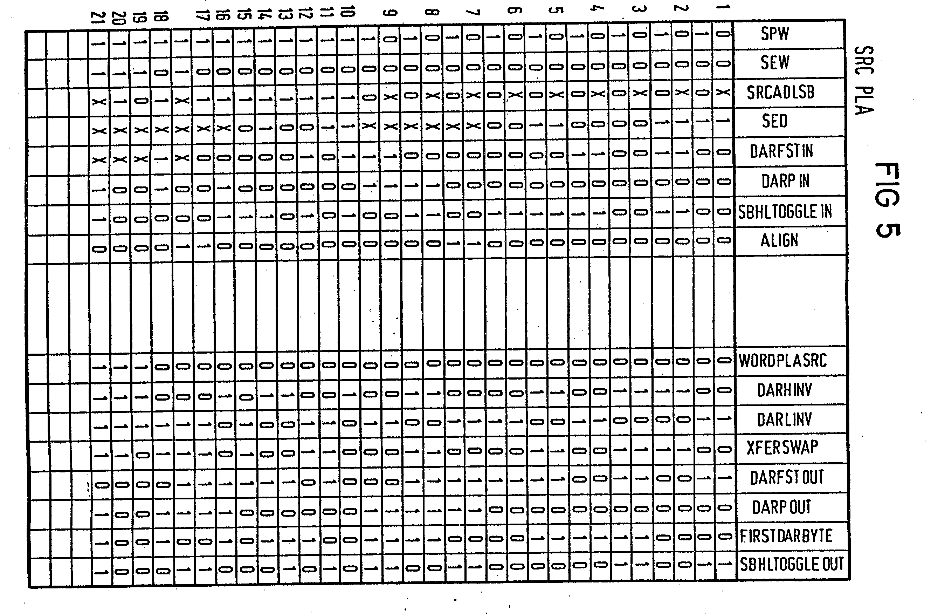

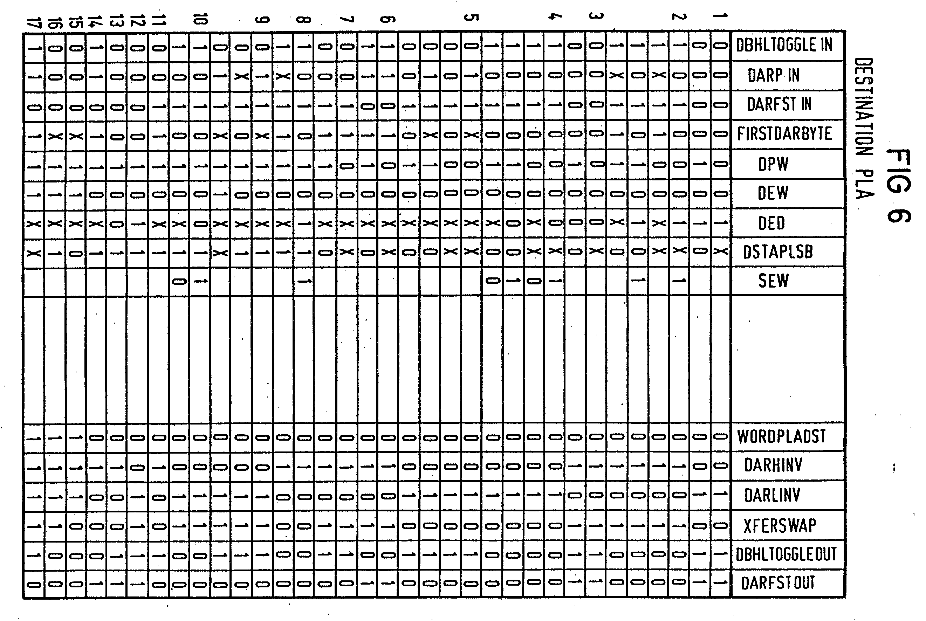

Die Fig. 3 und 4 zeigen das Schaltbild einer erfindungsgemäßen Datenhandhabungseinheit DHU. Die Fig. 3 ist in zwei Teilfiguren 3a und 3b aufgeteilt. Wenn die Fig. 3b rechts neben die Fig. 3a bündig angelegt wird, ergibt sich die Gesamtfigur 3. Wenn die Fig. 3b rechts neben die Fig. 4a bündig angelegt wird, ergibt sich die Gesamtfigur 4. Zusammen mit den oben gegebenen Erklärungen für die Signale und zusammen mit den in den Fig. 5 und 6 angegebenen Wahrheitstabellen für diese Signale sind die Fig. 3 und 4 selbsterklärend. Eine PLA (programmable logic array) kann bei Kenntnis des Lehrbuchs von C. MEAD und L. Conway, ''Introduction to VLSI Systems'', Addison-Wesley, insbesondere dem Kapitel 3.10 ''The Programmable Logic Array'' bei vorgegebenen Eingangssignalen und vorgegebenen Ausgangssignalen dieser PLA in einfacher Weise konstruiert werden.

Fig. 5 zeigt die Wahrheitstabelle für die SRC PLA, und zwar in der linken Hälfte die Eingangsparameter von links nach rechts angeordnet SPW, SEW, SRCADLSB, SED, DARFSTIN, DARPIN, SBHLTOGGLEIN, ALIGN. In der rechten Hälfte von Fig. 5 sind die Ausgangsparameter der SRCPLA angegeben, und zwar in der Reihenfolge von links nach rechts WORDPLASRC, DARHINV, DARLINV, XFERSWAP, DARFSTOUT, DARPOUT, FIRSTDARBYTE, SBHLOGGLEOUT.

Fig. 6 zeigt die Wahrheitstabelle für die DSTPLA. In der linken Hälfte von Fig. 6 sind die Eingangsparameter für DSTPLA angegeben, und zwar in der gleichen Folge von links nach rechts DBHLTOGGLEIN, DARPIN, DARFSTIN, FIRSTDARBYTE, DPW, DEW, DEE, DSTADLSB, SEW. In der rechten Hälfte von Fig. 6 sind die Ausgangsparameter für DSTPLA angegeben, und zwar in der Reihenfolge der Spalten von links nach rechts WORDPLADST, DARHINV, DARLINV, XFERSWAP, DBH/LTOGGLEOUT, DARFSTOUT.

In den Fig. 5 und 6 entspricht eine 1 der logischen 1 des in der jeweiligen Spalte enthaltenen Parameters, eine 0 entspricht der logischen 0 des in der jeweiligen Spalte enthaltenen Parameters und ein x bedeutet, daß die Polarität des betreffenden Eingangsparameters in der entsprechenden Zeile für die Ausgangsparameter-Konstellation der entsprechenden Zeile ohne Bedeutung ist.

In Fig. 2 sind die 38 Bits angegeben, die im MLATCH aus dem Mikrobefehl MB und von einer Priorisierungseinheit PRIOi herkommen. Außerdem ist in Fig. 2 das Prinzip-Schaltbild für eine DMA-Steuerung DC der Datenhandhabungseinheit DHU angegeben. Die Steuerung DC erhält neun statische Parameter von den Kanal-Steuerregistern CCR über die PLA-Register PLAIRi. Fünf Parameter werden in einer 'feedback'-Schaltung dynamisch in die jeweilige SRC-DST-PLA eingekoppelt. Außerdem stellt die Steuerung DC die drei Bits für das DMA-OFFSET OF zur Verfügung. Die fünf dynamischen Parameter-Bits für FEEDBACK tragen zur Steuerung der Pipeline-Ausführungssteuerung PIP1 bei.

**Patentansprüche**

1. Schaltungsanordnung in einem DMA-Controller mit mehreren unabhängigen Datenübertragungskanälen zur autonomen Datenübertragung zwischen mehreren Datenquellen und Datensenken, dadurch gekennzeichnet, daß ein in einem Speicher abspeicherbares Mikroprogramm auf eine Datenhandhabungseinheit (DHU) einwirkt, in der jedem Datenübertragungskanal ein Daten-Assembly-Register (DARi) zur Zwischenspeicherung von Datenbits bzw. Steuerinformationen zugeordnet ist und daß die Datenhandhabungseinheit (DHU) Mittel enthält, die nach mikroprogrammierter Initialisierung eine kanalspezifische Abarbeitung der Datenübertragung aller Datenübertragungskanäle ausführen.

2. Schaltungsanordnung nach Anspruch 1, dadurch gekennzeichnet, daß die Datenhandhabungseinheit (DHU) eine "Offset"-Steuerung (OC) und eine Ausführungssteuerung (EC) enthält, die mit den Daten-Assembly-Registern (DARi) in Verbindung stehen und zum Informationsaustausch mit externen Informationssenken bzw. -quellen dienen.

3. Schaltungsanordnung nach Anspruch 1 oder 2, dadurch gekennzeichnet, daß die Datenhandhabungseinheit (DHU) mit Steuer-Flip-Flops verbunden ist, die für die Eintragungs- und Austragungsfolge der Daten in die Datenhandhabungseinheit (DHU) benutzt werden.

4. Schaltungsanordnung nach einem der vorhergehenden Ansprüche, dadurch gekennzeichnet, daß die Datenhandhabungseinheit (DHU) mit einer Match-Verify-Unit verbunden ist, die Datenvergleiche ausführen kann.

5. Verfahren zum Betrieb einer Schaltungsanordnung in einem DMA-Controller mit mehreren unabhängigen Datenübertragungskanälen zur autonomen Datenübertragung zwischen mehreren Datenquellen und Datensenken, dadurch gekennzeichnet, daß ein in einem Speicher abspeicherbares Mikroprogramm auf eine Datenhandhabungseinheit (DHU) einwirkt, in der jedem Datenübertragungskanal ein Daten-Assembly-Register (DARi) zur Zwischenspeicherung von Datenbits bzw. Steuerinformationen zugeordnet ist und wobei die Datenhandhabungseinheit (DHU) Mittel enthält, die nach mikroprogrammierter Initialisierung eine kanalspezifische Abarbeitung der Datenübertragungskanäle ausführen wobei die Datenhandhabungseinheit (DHU) die Zugriffsquantität Byte/Wort bei einem Informationstransfer auf einen externen Bus ermittelt.

6. Verfahren zum Betrieb einer Schaltungsanordnung nach Anspruch 5, dadurch gekennzeichnet, daß die Datenhandhabungseinheit (DHU) Daten-Assembly-Register (DARi)-Hälften in Bezug auf Transferoperationen aktiviert.

7. Verfahren zum Betrieb einer Schaltungsanordnung nach einem der Ansprüche 5 oder 6, dadurch gekennzeichnet, daß die Datenhandhabungseinheit (DHU) interne Datenbusse (D) inklusive eines Swappers in der Busschnittstelleneinheit (BIU) steuert.

8. Verfahren zum Betrieb einer Schaltungsanordnung nach einem der Ansprüche 5, 6 oder 7, dadurch gekennzeichet, daß die Datenhandhabungseinheit (DHU) die notwendigen Aktionen für Compare-, Mismatch- und Verify-Operationen steuert.

9. Verfahren zum Betrieb einer Schaltungsanordnung nach einem der Ansprüche 5, 6, 7 oder 8, dadurch gekennzeichnet, daß die Datenhandhabungseinheit (DHU) Steuerparameter (DARFST, FIRST, DARBYTE, DARPE) von Daten-Assembly-Registern (DARi) verwaltet.

10. Verfahren zum Betrieb einer Schaltungsanordnung nach einem der Ansprüche 5, 6, 7, 8 oder 9, dadurch gekennzeichnet, daß die Datenhandhabungseinheit (DHU) einen Offset-Wert liefert, der zu einem Adreßpointer nach jedem DMA-Zugriff addiert wird.

**Revendications**

1. Montage pour un contrôleur DMA à plusieurs canaux indépendants de transmission de données servant à réaliser la transmission autonome de données entre plusieurs sources de données et plusieurs récepteurs de données, caractérisé par le fait qu'un microprogramme pouvant être mémorisé dans une mémoire agit sur une unité (DHU) de manipulation des données, dans laquelle à chaque canal de transmission de données est associé un registre d'ensembles de données (DARi) servant à réaliser la mémorisation intermédiaire de bits de données ou d'informations de commande, et que l'unité (DHU) de manipulation des données comporte des moyens, qui, après une initialisation microprogrammée, exécutent un traitement, spécifique aux canaux, de transmission des données de tos les canaux de transmission de données.

2. Montage suivant la revendication 1, caractérisé par le fait que l'unité (DHU) de manipulation des données comporte un dispositif de commande "offset" (OC) et un dispositif de commande d'exécution (EC), qui sont reliés aux registres d'ensembles de données (DARi) et qui sont utilisés pour réaliser l'échange d'informations avec des dispositifs extérieurs de réception d'informations ou des sources extérieures d'informations.

3. Montage suivant la revendication 1 ou 2, caractérisé par le fait que l'unité (DHU) de manipulation des données est reliée à des bascules bistables de commande, qui sont utilisées pour la séquence d'introduction et d'extraction des données dans l'unité (DHU) de manipulation des données.

4. Montage suivant l'une des revendications précédentes, caractérsié par le fait que l'unité (DHU) de manipulation des données est reliée à une unité Match-Verify-Unit (unité de contrôle de concordance et de vérification), qui peut exécuter des comparaisons de données.

5. Procédé pour la mise en oeuvre d'un montage situé dans un contrôleur DMA et comportant plusieurs canaux indépendants de transmission de données pour réaliser la transmission autonome de données entre plusieurs sources de données et plusieurs dispositifs de réception de données, caractérisé par le fait qu'un microprogramme pouvant être mémorisé dans une mémoire agit sur une unité (DHU) de manipulation des données, dans laquelle à chaque canal de transmission de données est associé un registre d'ensembles de données (DARi) servant à réaliser la mémorisation intermédiaire de bits de données ou d'informations de commande, et que l'unité (DHU) de manipulation des données comporte des moyens, qui, après une initialisation microprogrammée, exécutent un traitement, spécifique aux canaux, de transmission des données de tous les canaux de transmission de données, l'unité (DHU) de manipulation des données déterminant la quantité d'accès octet/mot dans le cas d'un transfert d'informations à un bus extérieur.

6. Procédé pour la mise oeuvre d'un montage suivant la revendication 5, caractérisé par le fait que l'unité (DHU) de manipulation des données active des moitiés de registres d'ensembles de données (DARi) en rapport avec des opérations de transfert.

7. Procédé pour la mise en oeuvre d'un montage suivant l'une des revendications 5 ou 6, caractérisé par le fait que l'unité (DHU) de manipulation des données commande des bus internes (D) de transmission de données ainsi qu'un dispositif Swapper (dispositif de transfert), dans l'unité (BIU) d'interface de liaison au bus.

8. Procédé pour la mise en oeuvre d'un montage suivant l'une des revendications 5, 6 ou 7, carctérisé par le fait que l'unité (DHU) de manipulation des données commande les actions nécessaires pour des opérations de comparaison, de contrôle de non-concordance et de vérification.

9. Procédé pour la mise en oeuvre d'un montage suivant l'une des revendications 5, 6, 7 ou 8, caractérisé par le fait que l'unité (DHU) de manipulation des données gère des paramètres de commande (DARFST, FIRST, DARBYTE, DARPE) de registres d'ensembles de données (DARi).

10. Procédé pour la mise en oeuvre d'un montage suivant l'une des revendications 5, 6, 7, 8 ou 9, caractérisé par le fait que l'unité (DHU) de manipulation des données envoie une valeur d'offset qui est ajoutée à un pointeur d'adresse après chaque accès DMA.

**Claims**

1. Circuit arrangement in a DMA controller having a plurality of independent data transmission channels for autonomous data transmission between a plurality of data sources and data sinks, characterized in that a microprogram, which can be stored in a memory, acts on a data handling unit (DHU), in which each data transmission channel is assigned a data assembly register (DARi) for the temporary storage of data bits or control information, and in that the data handling unit (DHU) contains means which, after microprogrammed initialization, execute a channel-specific processing of the data transmission of all data transmission channels.

2. Circuit arrangement according to Claim 1, characterized in that the data handling unit (DHU) contains an "offset" controller (OC) and an execution controller (EC) which are connected to the data assembly registers (DARi) and serve for information exchange with external information sinks or information sources.

3. Circuit arrangement according to Claim 1 or 2, characterized in that the data handling unit (DHU) is connected to control flip-flops which are used for the entry and exit sequence of the data in the data handling unit (DHU).

4. Circuit arrangement according to one of the preceding claims, characterized in that the data handling unit (DHU) is connected to a match-verify unit which can execute data comparisons.

5. Method for operating a circuit arrangement in a DMA controller having a plurality of independent data transmission channels for autonomous data transmission between a plurality of data sources and data sinks, characterized in that a microprogram, which can be stored in a memory, acts on a data handling unit (DHU), in which each data transmission channel is assigned a data assembly register (DARi) for the temporary storage of data bits or control information, and in which the data handling unit (DHU) contains means which, after microprogrammed initialization, execute a channel-specific processing of the data transmission channels, the data handling unit (DHU) determining the access quantity byte/word during an information transfer to an external bus.

6. Method for operating a circuit arrangement according to Claim 5, characterized in that the data handling unit (DHU) activates data assembly register (DARi) halves with respect to transfer operations.

7. Method for operating a circuit arrangement according to one of Claims 5 or 6, characterized in that the data handling unit (DHU) controls internal data buses (D) including a swapper in the bus interface unit (BIU).

8. Method for operating a circuit arrangement according to one of Claims 5, 6 or 7, characterized in that the data handling unit (DHU) controls the necessary actions for compare, mismatch and verify operations.

9. Method for operating a circuit arrangement according to one of Claims 5, 6, 7 or 8, characterized in that the data handling unit (DHU) manages control parameters (DARFST, FIRST, DARBYTE, DARPE) of data assembly registers (DARi).

10. Method for operating a circuit arrangement according to one of Claims 5, 6, 7, 8, or 9, characterized in that the data handling unit (DHU) delivers an offset value which is added to an address pointer after each DMA access.

FIG 1

EP 0 108 418 B1

# FIG 2

# FIG 3a

# FIG 3b

# FIG 4a

# FIG 4b

| OUTPUT SIGNAL | TO UNIT |
|---|---|
| SBHLTOGGLE | |
| DARFSTIN | |
| DARHINVL | |
| DMA OFFSET 2 | |
| DMA OFFSET 1 | |
| DMA OFFSET 0 | |
| WORDPLASRC | |
| DEWQALIGN | |
| WORDPLA DST | |
| XFERSWAP | |
| DARLINV | |
| DARHINV | |
| WORDPLA | |

# FIG 5

SRC PLA

| | SPW | SEW | SRCADLSB | SED | DARFSTIN | DARP IN | SBHLTOGGLE IN | ALIGN | | WORDPLASRC | DARHINV | DARLINV | XFERSWAP | DARFST OUT | DARP OUT | FIRSTDARBYTE | SBHLTOGGLE OUT |
|---|---|---|---|---|---|---|---|---|---|---|---|---|---|---|---|---|---|
| 1 | 0 | 0 | X | 1 | 0 | 0 | 0 | 0 | | 0 | 0 | 1 | 0 | 1 | 0 | 0 | 1 |
| | 1 | 0 | 0 | 1 | 0 | 0 | 0 | 0 | | 0 | 0 | 1 | 0 | 1 | 0 | 0 | 1 |
| 2 | 0 | 0 | X | 1 | 1 | 0 | 1 | 0 | | 0 | 1 | 0 | 1 | 0 | 0 | 0 | 0 |
| | 1 | 0 | 0 | 1 | 1 | 0 | 1 | 0 | | 0 | 1 | 0 | 1 | 0 | 0 | 0 | 0 |
| 3 | 0 | 0 | X | 0 | 0 | 0 | 0 | 0 | | 0 | 1 | 0 | 1 | 1 | 0 | 1 | 1 |
| | 1 | 0 | 0 | 0 | 0 | 0 | 0 | 0 | | 0 | 1 | 0 | 1 | 1 | 0 | 1 | 1 |
| 4 | 0 | 0 | X | 0 | 1 | 0 | 1 | 0 | | 0 | 0 | 1 | 0 | 0 | 0 | 1 | 0 |
| | 1 | 0 | 0 | 0 | 1 | 0 | 1 | 0 | | 0 | 0 | 1 | 0 | 0 | 0 | 1 | 0 |
| 5 | 0 | 0 | X | 1 | 0 | 0 | 1 | 0 | | 0 | 1 | 0 | 1 | 1 | 0 | 1 | 0 |
| | 1 | 0 | 0 | 1 | 0 | 0 | 1 | 0 | | 0 | 1 | 0 | 1 | 1 | 0 | 1 | 0 |
| 6 | 0 | 0 | X | 0 | 0 | 0 | 1 | 0 | | 0 | 0 | 1 | 0 | 1 | 0 | 0 | 0 |
| | 1 | 0 | 0 | 0 | 0 | 0 | 1 | 0 | | 0 | 0 | 1 | 0 | 1 | 0 | 0 | 0 |
| 7 | 0 | 0 | X | X | 0 | 0 | 0 | 1 | | 0 | 0 | 1 | 0 | 1 | 1 | 0 | 1 |
| | 1 | 0 | 0 | X | 0 | 0 | 0 | 1 | | 0 | 0 | 1 | 0 | 1 | 1 | 0 | 1 |
| 8 | 0 | 0 | X | X | 0 | 1 | 1 | 0 | | 0 | 1 | 0 | 1 | 1 | 1 | 1 | 0 |
| | 1 | 0 | 0 | X | 0 | 1 | 1 | 0 | | 0 | 1 | 0 | 1 | 1 | 1 | 1 | 0 |
| 9 | 0 | 0 | X | X | 1 | 1 | 0 | 0 | | 0 | 0 | 1 | 0 | 0 | 1 | 1 | 1 |
| | 1 | 0 | 0 | X | 1 | 1 | 0 | 0 | | 0 | 0 | 1 | 0 | 0 | 1 | 1 | 1 |
| 10 | 1 | 0 | 1 | 1 | 1 | 0 | 1 | 0 | | 0 | 1 | 0 | 0 | 0 | 0 | 0 | 0 |
| 11 | 1 | 0 | 1 | 1 | 0 | 0 | 0 | 0 | | 0 | 0 | 1 | 1 | 1 | 0 | 0 | 1 |
| 12 | 1 | 0 | 1 | 0 | 1 | 0 | 1 | 0 | | 0 | 0 | 1 | 1 | 0 | 0 | 1 | 0 |
| 13 | 1 | 0 | 1 | 0 | 0 | 0 | 0 | 0 | | 0 | 1 | 0 | 0 | 1 | 0 | 1 | 1 |
| 14 | 1 | 0 | 1 | 1 | 0 | 0 | 1 | 0 | | 0 | 1 | 0 | 0 | 1 | 0 | 1 | 0 |
| 15 | 1 | 0 | 1 | 0 | 0 | 0 | 1 | 0 | | 0 | 0 | 1 | 1 | 1 | 0 | 0 | 0 |
| 16 | 1 | 0 | 1 | X | 0 | 1 | 1 | 0 | | 0 | 1 | 0 | 0 | 1 | 1 | 1 | 0 |
| 17 | 1 | 0 | 1 | X | 0 | 0 | 0 | 1 | | 0 | 0 | 1 | 1 | 1 | 1 | 0 | 1 |
| | 1 | 1 | X | X | X | 0 | 0 | 1 | | 0 | 0 | 1 | 1 | 1 | 1 | 0 | 1 |
| 18 | 1 | 0 | 1 | X | 1 | 1 | 0 | 0 | | 0 | 0 | 1 | 1 | 0 | 1 | 1 | 0 |
| 19 | 1 | 1 | 0 | X | X | 0 | 0 | 0 | | 1 | 1 | 1 | 0 | 0 | 0 | 0 | 0 |
| 20 | 1 | 1 | 1 | X | X | 0 | 0 | 0 | | 1 | 1 | 1 | 1 | 0 | 0 | 0 | 0 |
| 21 | 1 | 1 | X | X | X | 1 | 1 | 0 | | 1 | 1 | 1 | 1 | 0 | 1 | 1 | 1 |

7

# FIG 6

## DESTINATION PLA

| | DBHLTOGGLE IN | DARP IN | DARFST IN | FIRSTDARBYTE | DPW | DEW | DED | DSTAPLSB | SEW | | WORDPLADST | DARHINV | DARLINV | XFERSWAP | DBHLTOGGLE OUT | DARFST OUT |
|---|---|---|---|---|---|---|---|---|---|---|---|---|---|---|---|---|
| 1 | 0 | 0 | 0 | 0 | 0 | 0 | 1 | X | | | 0 | 0 | 1 | 0 | 1 | 1 |
| | 0 | 0 | 0 | 0 | 1 | 0 | 1 | 0 | | | 0 | 0 | 1 | 0 | 1 | 1 |
| 2 | 1 | 0 | 1 | 0 | 0 | 0 | 1 | X | 1 | | 0 | 1 | 0 | 1 | 0 | 0 |
| | 1 | X | 1 | 1 | 0 | 0 | X | X | | | 0 | 1 | 0 | 1 | 0 | 0 |
| | 1 | 0 | 1 | 0 | 1 | 0 | 1 | 0 | 1 | | 0 | 1 | 0 | 1 | 0 | 0 |
| | 1 | X | 1 | 1 | 1 | 0 | X | 0 | | | 0 | 1 | 0 | 1 | 0 | 0 |
| 3 | 0 | 0 | 0 | 0 | 0 | 0 | 0 | X | | | 0 | 1 | 0 | 1 | 1 | 1 |
| | 0 | 0 | 0 | 0 | 1 | 0 | 0 | 0 | | | 0 | 1 | 0 | 1 | 1 | 1 |
| 4 | 1 | 0 | 1 | 0 | 0 | 0 | 0 | X | 1 | | 0 | 0 | 1 | 0 | 0 | 0 |
| | 1 | 0 | 1 | 0 | 0 | 0 | X | X | 0 | | 0 | 0 | 1 | 0 | 0 | 0 |
| | 1 | 0 | 1 | 0 | 1 | 0 | 0 | 0 | 1 | | 0 | 0 | 1 | 0 | 0 | 0 |
| | 1 | 0 | 1 | 0 | 1 | 0 | X | 0 | 0 | | 0 | 0 | 1 | 0 | 0 | 0 |
| 5 | 0 | 1 | 1 | X | 0 | 0 | X | X | | | 0 | 0 | 1 | 0 | 1 | 0 |
| | 0 | 0 | 1 | 0 | 0 | 0 | X | X | | | 0 | 0 | 1 | 0 | 1 | 0 |
| | 0 | 1 | 1 | X | 1 | 0 | X | 0 | | | 0 | 0 | 1 | 0 | 1 | 0 |
| | 0 | 0 | 1 | 0 | 1 | 0 | X | 0 | | | 0 | 0 | 1 | 0 | 1 | 0 |
| 6 | 1 | 1 | 0 | 1 | 0 | 0 | X | X | | | 0 | 1 | 0 | 1 | 0 | 1 |
| | 1 | 1 | 0 | 1 | 1 | 0 | X | 0 | | | 0 | 1 | 0 | 1 | 0 | 1 |
| 7 | 0 | 0 | 1 | 1 | 0 | 0 | X | X | | | 0 | 1 | 0 | 1 | 1 | 0 |
| | 0 | 0 | 1 | 1 | 1 | 0 | X | 0 | | | 0 | 1 | 0 | 1 | 1 | 0 |
| 8 | 1 | 0 | 1 | 0 | 1 | 0 | 1 | 1 | 1 | | 0 | 1 | 0 | 0 | 0 | 0 |
| | 1 | X | 1 | 1 | 1 | 0 | X | 1 | | | 0 | 1 | 0 | 0 | 0 | 0 |
| 9 | 0 | 1 | 1 | X | 1 | 0 | X | 1 | | | 0 | 0 | 1 | 1 | 1 | 0 |
| | 0 | X | 1 | 0 | 1 | 0 | X | 1 | | | 0 | 0 | 1 | 1 | 1 | 0 |
| | 0 | 1 | 1 | X | 1 | 1 | X | X | | | 0 | 0 | 1 | 1 | 1 | 0 |
| 10 | 1 | 0 | 1 | 0 | 1 | 0 | 0 | 1 | 1 | | 0 | 0 | 1 | 1 | 0 | 0 |
| | 1 | 0 | 1 | 0 | 1 | 0 | X | 1 | 0 | | 0 | 0 | 1 | 1 | 0 | 0 |
| 11 | 0 | 0 | 1 | 1 | 1 | 0 | X | 1 | | | 0 | 1 | 0 | 0 | 1 | 0 |
| 12 | 0 | 0 | 0 | 0 | 1 | 0 | 1 | 1 | | | 0 | 0 | 1 | 1 | 1 | 1 |
| 13 | 0 | 0 | 0 | 0 | 1 | 0 | 0 | 1 | | | 0 | 1 | 0 | 0 | 1 | 1 |
| 14 | 1 | 1 | 0 | 1 | 1 | 0 | X | 1 | | | 0 | 1 | 0 | 0 | 0 | 1 |
| 15 | 0 | 0 | 0 | X | 1 | 1 | X | 0 | | | 1 | 1 | 1 | 0 | 0 | 0 |
| 16 | 0 | 0 | 0 | X | 1 | 1 | X | 1 | | | 1 | 1 | 1 | 1 | 0 | 0 |
| 17 | 1 | 1 | 0 | 1 | 1 | 1 | X | X | | | 1 | 1 | 1 | 1 | 1 | 0 |